# EUROPÄISCHE PATENTSCHRIFT

(11) **EP 2 627 542 B1**
(45) Veröffentlichungstag und Bekanntmachung des Hinweises auf die Patenterteilung: **15.03.2017**
(21) Anmeldenummer: 11768020.7
(22) Anmeldetag: 13.10.2011
(51) Int. Cl.: B60R 25/02

(54) **VORRICHTUNG ZUR VERLAGERUNG EINES SPERRELEMENTES**
DEVICE FOR MOVING A LOCKING MEMBER
DISPOSITIF DE DÉPLACEMENT D'UN VERROU

(30) Priorität: 13.10.2010 DE 102010038160
(43) Veröffentlichungstag der Anmeldung: 21.08.2013
(60) Teilanmeldung: 16194223.0
(73) Patentinhaber: Huf Hülsbeck & Fürst GmbH & Co. KG, 42551 Velbert (DE)
(72) Erfinder: TRISCHBERGER, Werner, 85229 Langenpettenbach (DE)
(74) Vertreter: Vogel, Andreas
(86) Internationale Anmeldenummer: PCT/EP2011/067907
(87) Internationale Veröffentlichungsnummer: WO 2012/049258

(56) Entgegenhaltungen:
- DE-A1- 1 780 228
- DE-A1- 3 004 762
- GB-A- 2 018 882
- US-A- 4 400 954

## Beschreibung

Die Erfindung betrifft eine Vorrichtung zur Verlagerung eines Sperrelementes eines funktionswesentlichen Bauteils, insbesondere einer Lenksäule eines Kraftfahrzeuges, mit einem Schließzylinder, der einen drehbaren Zylinderkern mit einem Schlüsselkanal aufweist, einem am Schließzylinder angeordneten Steuerglied, das mit dem Sperrelement derart in Wirkverbindung steht, dass bei einer Drehung des Zylinderkerns das Sperrelement zwischen einer Verriegelungsstellung und einer Entriegelungsstellung bringbar ist, wobei der Schließzylinder ein Erkennungselement aufweist, das zwischen einer ausgefahrenen und einer eingefahrenen Lage bewegbar ist, wobei bei einem schlüsselfreien Schlüsselkanal das Erkennungselement in der eingefahrenen Lage sich befindet und bei einem eingeführten Schlüssel im Schlüsselkanal das Erkennungselement in der ausgefahrenen Lage sich befindet, eine Sicherheitssperre vorgesehen ist, die in einen aktivierten Zustand und einen deaktivierten Zustand bringbar ist und ein Koppelelement aufweist, das mit dem Sperrelement sowie mit dem Steuerglied in Wirkverbindung steht, wobei in dem deaktivierten Zustand die Sicherheitssperre eine Bewegung des Sperrelementes zulässt und das Erkennungselement in der eingefahrenen Lage sich befindet, bei der das Erkennungselement entkoppelt vom Koppelelement ist, und in dem aktivierten Zustand die Sicherheitssperre eine Bewegung des Sperrelementes aus der Entriegelungsstellung in die Verriegelungsstellung blockiert und das Erkennungselement in der ausgefahrenen Lage sich befindet.

In der DE 10016095 A1 ist ein Lenkschloss für Kraftfahrzeuge beschrieben, bei dem über eine Drehung eines Zylinderkerns eines Schließzylinders ein Sperrelement zwischen einer Verriegelungsstellung und einer Entriegelungsstellung bewegt werden kann. Hierbei ist zwischen dem Sperrelement und dem Zylinderkern ein bewegbares Fühlglied und eine parallel zur Zylinderachse verlaufende Hubstange vorgesehen. Ist ein Schlüssel im Zylinderkern eingeführt, wird dieser Zustand durch das Fühlglied erkannt, wobei gleichzeitig das Fühlglied die Hubstange in ihrer Position hält, wobei gleichzeitig eine Verschiebung des Sperrelementes in die Verriegelungsstellung blockiert ist. Dieses Lenkschloss zeichnet sich durch hervorragende Funktionsweise aus, dennoch hat sich gezeigt, dass in einigen Anwendungsfällen eine kleinere Gesamtdimensionierung notwendig sein kann.

Die US 4 400 954 A offenbart eine Vorrichtung nach dem Oberbegriff des Anspruchs 1.

Es ist Aufgabe der vorliegenden Erfindung, eine Vorrichtung zur Verlagerung des Sperrelementes zu schaffen, die kompakter gebaut ist und die den hohen Anforderungen einer funktionsgerechten Bewegung des Sperrelementes gerecht wird. Des Weiteren soll die genannte Vorrichtung in ihrer Montage möglichst einfach und unkompliziert sein.

Die Aufgabe der vorliegenden Erfindung wird durch sämtliche Merkmale des unabhängigen Patentanspruches gelöst. In den abhängigen Patentansprüchen sind mögliche Ausführungsformen beschrieben.

Hierzu ist erfindungsgemäß vorgesehen, dass die Sicherheitssperre ein Hebelelement aufweist, das zwischen dem Erkennungselement und dem Koppelelement um eine Drehachse bewegbar angeordnet ist, wobei durch eine Bewegung des Erkennungselementes das Hebelelement zwischen einer Freigabeposition und einer Arretierposition bewegbar ist, in der Arretierposition das Hebelelement am Koppelement angreift, in der Freigabeposition das Hebelelement eine Bewegung des Koppelelementes zulässt, und das Hebelelement derart gelagert ist, dass bei der Bewegung zwischen der Freigabeposition und der Arretierposition die Drehachse verschiebbar ist. Das Hebelelement ist in seiner Freigabeposition losgelöst zum Koppelelement sowie zum Sperrelement. Befindet sich beispielsweise das Sperrelement in seiner Verriegelungsstellung, ist das Hebelelement entkoppelt zum Sperrelement. Erst über eine entsprechende Bewegung des Zylinderkerns sowie des Steuergliedes erfolgt eine Bewegung des Sperrelementes in Richtung Entriegelungsstellung, wobei in einer definierten Lage des Koppelelementes das Hebelelement derart am Koppelelement eingreift, dass das Koppelelement in seiner Bewegung blockiert ist.

Eine Bewegung des Hebelelementes zwischen seinen beiden Positionen erfolgt über das Erkennungselement, welches den eingeführten Schlüssel innerhalb des Schlüsselkanals detektiert. Hierbei ist vorzugsweise das Erkennungselement im Bereich des Kopfbereiches des Zylinderkerns angeordnet, an dem der Schlüssel von außen in den Schlüsselkanal eingeführt werden kann. Das Erkennungselement befindet sich vorzugsweise so lange in der ausgefahrenen Lage, bei der das Hebelelement arritierend das Koppelelement hält, bis nahezu erst der gesamte Schlüssel aus dem Schlüsselkanal herausgezogen ist. Da sich das Hebelelement sowohl um eine Drehachse schwenken kann als auch die Drehachse gleichzeitig verschiebbar ist, damit das Hebelelement seine entsprechende Position einnimmt, wird auf einfache Art und Weise die Gesamtkonstruktion der erfindungsgemäßen Vorrichtung kompakt ausgeführt. Gleichzeitig zeichnet sich die Sicherheitssperre in ihrer Kinematik als funktionssicher aus, da insbesondere das Hebelelement mit seiner verlagerbaren Drehachse zuverlässig vom Erkennungselement angetrieben werden kann und gleichzeitig sicher in seine jeweilige Position gebracht werden kann, ohne dass die Gefahr besteht, dass ein ungewolltes Loslösen aus der Arretierposition des Hebelelementes erfolgt, wodurch eine ungewollte Bewegung des Sperrelementes aus der Entriegelungsstellung in die Verriegelungsstellung ausgelöst wird. Insbesondere das Hebelelement mit seiner verlagerbaren Drehachse trägt dazu bei, dass die Dimensionierung der erfindungsgemäßen Vorrichtung gering gehalten werden kann.

In einer weiteren möglichen Ausführungsform der Erfindung kann das Hebelelement derart gelagert sein, dass bei der Bewegung zwischen der Freigabeposition und der Arretierposition mindestens zwei Bewegungen ausgeführt sind, wobei eine erste Bewegung eine Drehbewegung um die Drehachse ist und eine zweite Bewegung durch eine Verschiebung des Hebelelementes entlang einer definierten Kurvenbahn bestimmt ist, wobei insbesondere die zweite Bewegung eine translatorische Bewegung ist. Beispielsweise ist es denkbar, dass von der Überführung des Hebelelementes aus der Freigabeposition in die Arretierposition die erste und die zweite Bewegung des Hebelelementes gleichzeitig verlaufen. Ebenfalls ist es möglich, dass die beiden Bewegungen sequentiell hintereinander verlaufen oder zumindest teilweise sich überlagern. Befindet sich das Sperrelement in der Entriegelungsstellung, kann über ein Herausziehen des Schlüssels aus dem Schlüsselkanal eine entsprechende Bewegung des Erkennungselementes ausgelöst werden. Da das Erkennungselement mit dem Hebelelement gekoppelt ist, schwenkt das Hebelelement um seine Drehachse aus der Arretierposition in die Freigabeposition. Das bedeutet, dass das Hebelelement lediglich eine Bewegung ausübt, die eine reine Drehbewegung um den Drehpunkt sein kann. Da das Koppelelement vorzugsweise federbelastet ist, bewegt sich das Koppelelement selbstständig, wenn das Hebelelement die Arretierposition verlassen hat.

Das Hebelelement führt hingegen eine aus mindestens zwei Bewegungen bestehende Gesamtbewegung aus, wenn das Sperrelement von der Verriegelungsstellung in die Entriegelungsstellung überführt werden soll. Hierbei wird über die Einführung eines Schlüssels in den Schlüsselkanal zunächst das Erkennungselement bewegt, welches eine entsprechende Drehbewegung des Hebelelementes um eine Drehachse bewirkt, wobei das Hebelelement seine Freigabeposition verlässt, aber noch nicht die Arretierposition nach dieser ersten Drehbewegung erreicht hat. Während dieser ersten Drehbewegung des Hebelelementes erfolgt gleichzeitig über die Drehung des Schließzylinders eine Bewegung des am Schließzylinder angeordneten Steuergliedes, welches das Koppelelement und somit das Sperrelement aus seiner Verriegelungsstellung in Richtung Entriegelungsstellung überführt. Während der Bewegung des Sperrelementes aus der Entriegelungsstellung in die Verriegelungsstellung erfolgt gleichzeitig eine Mitbewegung des Koppelelementes in Richtung des Hebelelementes. Während sich nun das Koppelelement angetrieben durch das Steuerglied bewegt, kommt es zu einer Kontaktierung des Hebelelementes mit dem Koppelelement. Obwohl das Hebelelement seine Freigabeposition verlassen hat, befindet es sich bei der Kontaktierung des Koppelelementes noch nicht in der Arretierposition. Vorzugsweise übt das Erkennungselement eine entsprechende Kraft auf das Hebelelement aus, damit in der entsprechenden Position des Koppelelementes das Hebelelement in seine endgültige Arretierposition selbstständig verfahren kann. Ausgehend von dieser Zwischenstellung, bei der das Hebelelement zwar seine eigentliche Freigabeposition verlassen hat, jedoch noch nicht die Arretierposition erreicht hat, erfolgt eine zweite Bewegung des Hebelelementes in Richtung der Arretierposition, die eine Richtung entlang einer definierten Kurvenbahn aufweisen kann. Hierbei verschiebt sich die Drehachse des Hebelelementes, um die sich das Hebelelement von seiner Arretierposition in seine Freigabeposition schwenken kann.

Ebenfalls kann vorgesehen sein, dass auf das Hebelelement ein Federelement wirkt, wodurch in der eingefahrenen Lage des Erkennungselementes das Hebelelement losgelöst vom Koppelelement ist und gleichzeitig eine Kontaktierung eines ersten Endes des Hebelelementes mit dem Erkennungselement vorliegt. Somit wird bewirkt, dass das Hebelelement stets mit dem Erkennungselement in Verbindung steht. Falls der Schlüssel aus dem Schlüsselkanal herausgezogen wird, wird dieses sofort durch das Erkennungselement erkannt, welches aus seiner ausgefahrenen Lage in die eingefahrene Lage sich bewegt. Da das Hebelelement stets in Kontakt mit dem Erkennungselement steht, erfolgt gleichzeitig eine Bewegung des Hebelelementes, bei der die Freigabeposition des Hebelelementes verlassen wird. Hierbei verschwenkt das Hebelelement um eine Drehachse, wobei gleichzeitig die Drehachse sich aufgrund einer Hubbewegung des Hebelelementes verlagern kann. In einer definierten Position des Hebelelementes kommt es schließlich zu einer Kontaktierung des Hebelelementes mit dem Koppelelement, wobei eine Zwischenposition des Hebelelementes erreicht ist. In dieser Zwischenposition steht stets das Hebelelement mit dem Erkennungselement in Kontakt. In dieser Zwischenposition des Hebelelementes erfolgt gleichzeitig eine Bewegung des Koppelelementes. Hat das Koppelelement eine definierte Lage erreicht, übt das Federelement eine entsprechende Kraft auf das Hebelelement aus, wobei das Hebelelement selbstständig aus der Zwischenposition in die Arretierposition verfährt. Hierbei erfolgt eine Bewegung des Hebelelementes in mindestens zwei Bewegungsrichtungen, wobei gleichzeitig das Hebelelement eine Drehbewegung und eine Hubbewegung ausführt. Während der Hubbewegung wird die Drehachse des Hebelelementes mit verfahren.

Eine weitere die Erfindung verbessernde Maßnahme kann vorsehen, dass eine Lagerung des Hebelelementes vorgesehen ist, die eine Bewegung des Hebelelementes in mindestens zwei Richtungen ermöglicht. Hierbei kann die Lagerung unterschiedliche Geometriegestaltungen aufweisen, damit das Hebelelement entsprechend der Lagerung in seiner Bewegung in die jeweilige Position zuverlässig geführt werden kann, ohne dass eine Kippbewegung senkrecht zur Drehbewegung um die Drehachse des Hebelelementes erfolgen kann. Gleichzeitig kann die Lagerung geometrisch derart ausgestaltet sein, dass die Bewegungen des Hebelelementes zwischen seiner Freigabeposition und der Arretierposition unterstützt und begünstigt werden.

Weiterhin kann vorgesehen sein, dass das Hebelelement ein zweites Ende aufweist, das im aktivierten Zustand der Sicherheitssperre in das Koppelelement formschlüssig eingreift. Das zweite Ende wie auch das erste Ende des Hebelelementes können fingerartig ausgestaltet sein. In einer möglichen Ausgestaltung der Erfindung kann das Koppelelement eine Ausnehmung aufweisen, wobei in der Arretierposition des Hebelelementes das zweite Ende des Hebelelementes in der Ausnehmung sich befindet. Die Ausnehmung kann derart ausgestaltet sein, dass kurzzeitig das Hebelelement mit seinem zweiten Ende kräftefrei in der Ausnehmung sich befindet, das bedeutet, dass das zweite Ende des Hebelelementes kontaktlos innerhalb der Aufnahme sich befinden kann. In der endgültigen Arretierposition kontaktiert das zweite Ende des Hebelelementes schließlich das Koppelelement im Bereich der Ausnehmung. Das Federelement übt eine entsprechende Kraft auf das Hebelelement aus, so dass die Arretierposition des Hebelelementes innerhalb der Ausnehmung des Koppelelementes zuverlässig gehalten ist. Gleichzeitig befindet sich das Erkennungselement in seiner ausgefahrenen Lage.

Ebenfalls ist es denkbar, dass das Koppelelement eine Auflagefläche aufweist, wobei während der Bewegung des Sperrelementes zwischen der Verriegelungsstellung und Entriegelungsstellung die Auflagefläche sich relativ zum Hebelelement bewegt und gleichzeitig eine Kontaktierung des zweiten Endes des Hebelelementes an der Auflagefläche vorliegt. Während sich das Hebelelement sich in der Zwischenposition befindet, bei der es aus seiner Freigabeposition in Richtung Arretierposition sich bewegt, kontaktiert das Hebelelement die Auflagefläche. Während dieser Zeit erfolgt eine Bewegung des Sperrelementes aus seiner Verriegelungsstellung in Richtung Entriegelungsstellung, wobei gleichzeitig das Koppelelement sich mitbewegt. Erreicht das Koppelelement seine definierte Position, kann das zweite Ende des Hebelelementes in die Ausnehmung des Koppelelementes hineinfahren und somit eine Blockierung der Bewegung des Koppelelementes bewirken. In einer möglichen Ausgestaltung der Erfindung kann die Ausnehmung in der Auflagefläche integriert sein.

Um eine leichtgängige Kinematik und Funktionsweise der Gesamtvorrichtung zu erreichen, weist erfindungsgemäß das Steuerglied eine Hubkurve auf, die bei einer Drehung des Zylinderkerns auf das Koppelelement wirkt, wodurch das Koppelelement eine Bewegung erfährt, wobei insbesondere das Koppelelement eine translatorische Bewegung erfährt.

Zudem kann das Hebelelement zumindest eine Ausbuchtung aufweisen, die seitlich am Hebelelement angeordnet ist und senkrecht zur Längserstreckung des Hebelelementes sich erstreckt, wobei insbesondere zwei Ausbuchtungen vorgesehen sind, die jeweils an einer Seite des Hebelelementes angeordnet sind. Ebenfalls ist es denkbar, dass ein Gehäuse vorgesehen ist, in dem die Sicherheitssperre mit dem Schließzylinder angeordnet ist, wobei das Gehäuse eine Montageöffnung zum Einsetzen des Hebelelementes aufweist, wobei die Montageöffnung mit einer Geometrie ausgeführt ist, die als Montagehilfe dient. Beispielsweise kann vorgesehen sein, dass die Montageöffnung eine Montagenut und eine Montageausnehmung für eine erste Ausbuchtung des Hebelelementes aufweist, wobei während des Einsetzen des Hebelelementes die erste Ausbuchtung entlang der Montagenut so lange verfahren wird, bis die erste Ausbuchtung in die Montageausnehmung überführt wird und dort die endgültige Endmontagestellung erreicht. Somit zeichnet sich die erfindungsgemäße Vorrichtung durch eine sehr einfache Montage des Hebelelementes einschließlich seines Federelementes aus.

Ebenfalls kann vorgesehen sein, dass eine zweite Ausbuchtung in der Lagerung des Gehäuses beweglich gehalten ist. Hierbei kann die zweite Ausbuchtung die verschiebbare Drehachse des Hebelelementes mit umfassen.

Vorteilhafterweise sind die Ausbuchtungen vorsprungartig aus dem Hebelelement erstreckt angeordnet. Die erste Ausbuchtung kann beispielsweise versetzt zur zweiten Ausbuchtung am Hebelelement angeordnet sein. Nachdem das Hebelelement seine Endmontagestellung innerhalb des Gehäuses der erfindungsgemäßen Vorrichtung erreicht hat, ist das Federelement an der Montageöffnung befestigt und greift gleichzeitig am Hebelelement an. Vorteilhafterweise kann das Federelement in der Montagenut befestigt sein und gleichzeitig in einer Öffnung des Hebelelementes wirken.

Vorteilhafterweise kann die erfindungsgemäße Vorrichtung eine Schlüsselabzugssicherung sein, die lediglich in einer Stellung des Zylinderkerns ein Herausziehen des Schlüssels aus dem Schlüsselkanal erlaubt. Die Schlüsselabzugssicherung bewirkt, dass lediglich in einer Stellung des Zylinderkerns der Schlüssel aus der Vorrichtung entfernt werden kann, wodurch das Sperrelement aus seiner Entriegelungsstellung in die Verriegelungsstellung verfahren kann.

Vorteilhafterweise kann die Vorrichtung zur Verlagerung des Sperrelementes durch eine Steuereinheit überwacht werden, die beispielsweise fahrzeugseitig angeordnet sein kann oder die innerhalb der erfindungsgemäßen Vorrichtung integriert ist. Aus sicherheitstechnischen Gründen kann es vorteilhaft sein, wenn neben der Erfassung des Bewegungsweges des Hebelelementes auch bestimmte Positionen des Erkennungselementes, Zylinderkerns, Steuergliedes oder des Koppelelementes erfasst werden. Dieses kann beispielsweise durch Sensoren, insbesondere Magnetfeldsensoren, erfolgen, die das magnetische Feld eines auf dem Erkennungselement, Zylinderkern, Steuerglied, Koppelelement und/oder Hebelelement angebrachten Permanentmagneten erfassen können. Der Sensor kann alternativ auch fotoelektrisch oder magnetisch dass sich jeweilige Element abtasten. Hierdurch kann eine elektronische Steuerung die Funktionsfähigkeit der erfindungsgemäßen Vorrichtung, insbesondere der Sicherheitssperre überwachen sowie etwaige Manipulationen erkennen.

Das Sperrelement kann aus einem Metall, insbesondere aus Stahl hergestellt sein. Die Materialdicke ist dabei so bemessen, dass weitestgehend eine Materialzerstörung ausgeschlossen werden kann.

Vorzugsweise kann der Kraftangriffspunkt des Federelements auf das Hebelelement zwischen der Drehachse und dem ersten Ende des Hebelelements wirken. Hierdurch wird bewirkt, dass das Hebelelement zuverlässig zwischen der Freigabeposition und der Arretierposition sich bewegen kann.

Die erfindungsgemäße Vorrichtung kann als elektrische Lenkungsverriegelung für Fahrzeuge zum Einsatz kommen, wobei die Vorrichtung zudem problemlos mit insbesondere so genannten "Keyless-Entry-Systemen" kombinierbar ist. Die erfindungsgemäße Vorrichtung kann von außen, beispielsweise per Funksignal oder nach einem stattgefundenen Datenaustausch aktiviert werden, das bedeutet, dass eine Überführung des Sperrelementes in seine jeweilige Stellung über ein Keyless-Entry-System erfolgen kann.

Die vorliegende Erfindung ermöglicht selbstverständlich eine Rückmeldung dahingehend, ob die betreffende Vorrichtung zuverlässig das funktionswesentliche Bauteil, insbesondere die Lenksäule oder einen Gangschalthebel des Kraftfahrzeuges blockiert oder nicht. Dies kann z. B. durch eine optische oder akustische Meldevorrichtung innerhalb des Kraftfahrzeuges dargestellt werden.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: die erfindungsgemäße Vorrichtung mit einem Sperrelement, das sich in seiner Verriegelungsstellung befindet und mit einem Hebelelement, das sich in der Freigabeposition befindet,
- Fig. 2: die Vorrichtung gemäß Figur 1 in einer Schnittansicht,
- Fig. 3: die Vorrichtung gemäß Figur 2, wobei das Sperrelement aus der Verriegelungsstellung in Richtung Entriegelungsstellung bewegt wird,
- Fig. 4: die erfindungsgemäße Figur 3 in einer weiteren Stellung,
- Fig. 5: die erfindungsgemäße Vorrichtung gemäß Figur 4 in einer weiteren Stellung,
- Fig. 6: die erfindungsgemäße Vorrichtung gemäß Figur 5, wobei das Hebelelement in eine Ausnehmung sich erstreckt und die Arretierposition einnimmt,
- Fig. 7: die erfindungsgemäße Vorrichtung gemäß Figur 2, wobei das Sperrelement in Richtung Verriegelungsstellung sich bewegt und das Hebelelement in der Freigabeposition sich befindet und
- Fig. 8: eine weitere Ausgestaltungsalternative eines Hebelelementes, welches in eine erfindungsgemäße Vorrichtung gemäß Figur 1 einsetzbar ist.

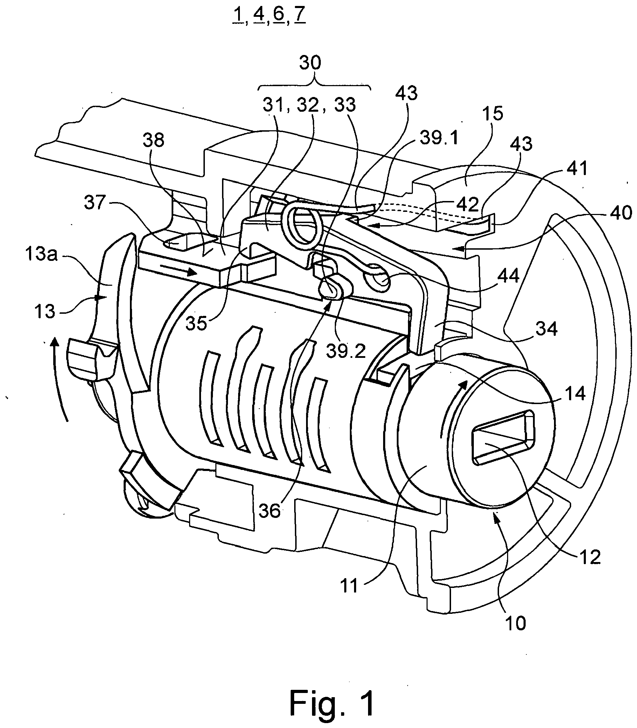

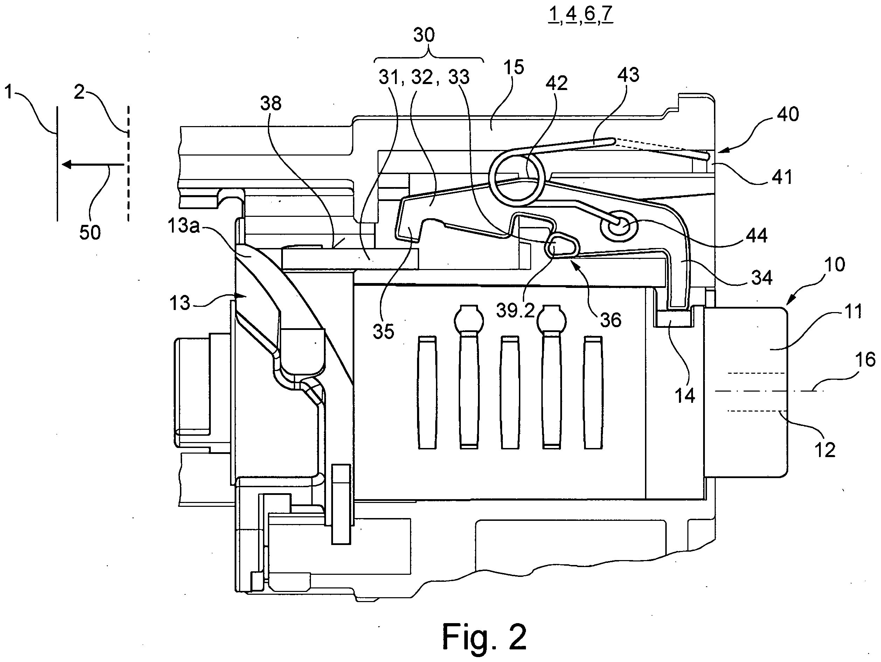

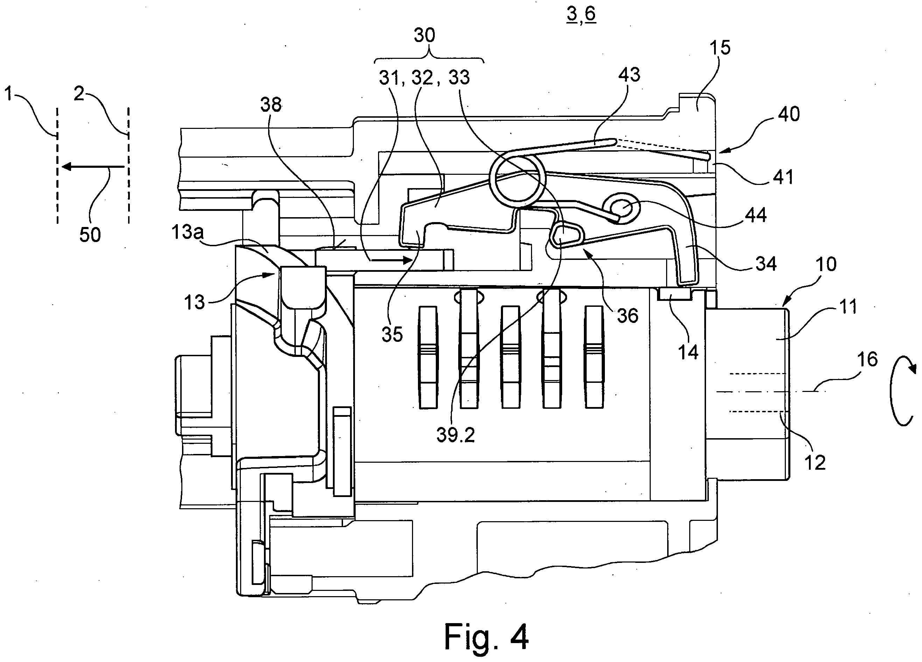

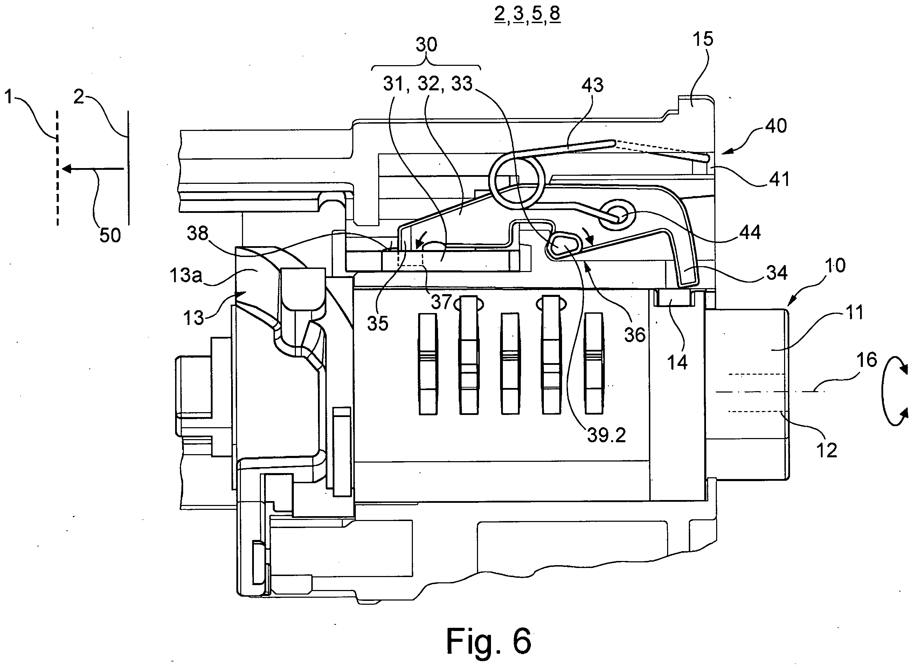

In Figur 1 ist eine erfindungsgemäße Vorrichtung zur Verlagerung eines Sperrelementes 50 dargestellt. Wie auch in den Figuren 2 bis 7 gezeigt ist, ist das Sperrelement 50 durch den Pfeil 50 verdeutlicht, wobei das Sperrelement 50 im vorliegenden Ausführungsbeispiel in seiner Verriegelungsstellung 1 in ein funktionswesentliches Bauteil, hier eine Lenksäule eines Kraftfahrzeuges, eingreift. In Figur 2 ist die Verriegelungsstellung 1 des Sperrelementes 50 gezeigt. In Figur 6 befindet sich hingegen das Sperrelement 50 in seiner Entriegelungsstellung 2, in der es losgelöst von der Lenksäule sich befindet.

Zudem ist ein Schließzylinder 10 vorgesehen, der einen drehbaren Zylinderkern 11 mit einem Schlüsselkanal 12 aufweist. Am Schließzylinder 10 ist ferner ein Steuerglied 13 vorgesehen, das eine vorsprungartige Geometrie in Form einer Hubkurve 13a aufweist.

Das Sperrelement 50 ist mit einem Koppelelement 31 fest verbunden. Wenn sich das Sperrelement 50 in seine jeweilige Stellung 1, 2 bewegt, erfolgt gleichzeitig eine Verschiebung des Koppelelementes 31. Das Koppelelement 31 hat den Zweck, das Sperrelement 50 mit einer Sicherheitssperre 30 zu verbinden, die im Folgenden beschrieben wird. In einem weiteren, nicht explizit dargestelltem Ausführungsbeispiel kann das Koppelelement 31 auch Bestandteil des Sperrelementes 50 sein. Das bedeutet, dass das Koppelelement 31 und das Sperrelement 50 ein gemeinsames Bauteil bilden.

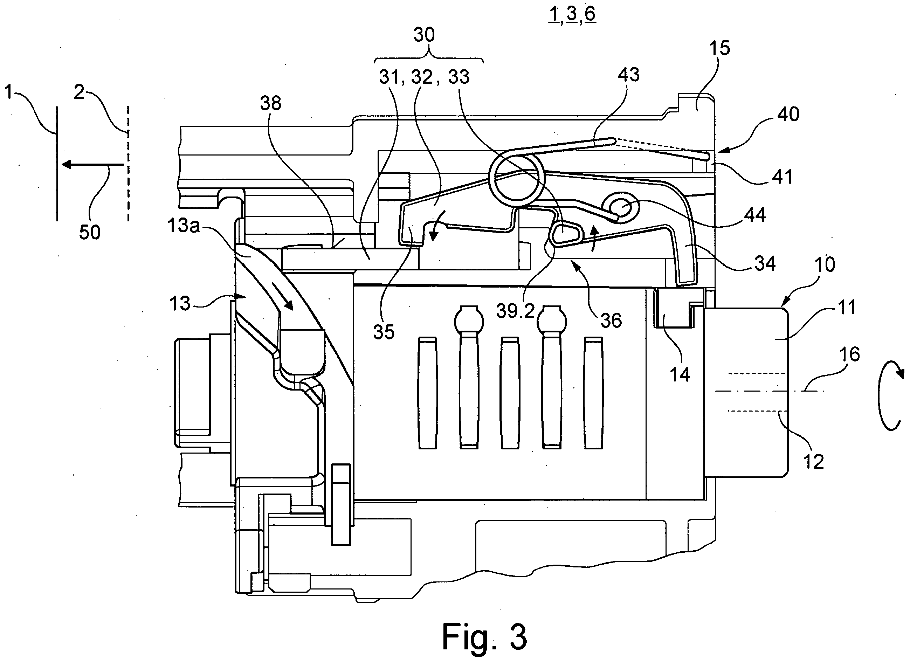

Der Schließzylinder 10 ist mit einem bewegbaren Erkennungselement 14 ausgestattet, das zwischen einer ausgefahrenen 3 und einer eingefahrenen Lage 4 bewegbar ist. Figur 2 zeigt das Erkennungselement 14 in der eingefahrenen Lage 4. Die Figuren 3 bis 6 zeigen das Erkennungselement 14 in der ausgefahrenen Lage 3. Befindet sich ein Schlüssel innerhalb des Schlüsselkanals 12, nimmt das Erkennungselement 14 die ausgefahrene Lage 3 ein. Befindet sich kein Schlüssel im Schlüsselkanal 12, so nimmt das Erkennungselement 14 seine eingefahrene Lage 4 ein.

Die Sicherheitssperre 30 weist ein Hebelelement 32 auf, das mit dem Sperrelement 50, insbesondere mit dem Koppelelement 31 und dem Erkennungselement 14 zusammenwirkt.

Das Hebelelement 32 ist zum Einen um eine Drehachse 33 bewegbar angeordnet. Wenn nun ausgehend von Figur 2 ein Schlüssel in den Schlüsselkanal 12 eingeführt wird, bewegt sich das Erkennungselement 14 aus seiner eingefahrenen Lage 4 in die ausgefahrene Lage 3 (siehe Figur 3). Hierbei drückt das Erkennungselement 14 das Hebelelement 32 nach oben, wobei das Hebelelement 32 mehrere Bewegungen ausführt. Zum Einen erfolgt eine Drehung des Hebelelementes 32 um eine Drehachse. Ferner verschiebt sich die Drehachse 33 entlang einer definierten Kurvenbahn nach oben und führt somit eine Hubbewegung aus. In Figur 2 befindet sich das Hebelelement 32 in seiner Freigabeposition 7, bei der es mit seinem ersten Ende 34 am Erkennungselement 14 anliegt. Gleichzeitig ist das zweite Ende 35 losgelöst vom Koppelelement 31. Während nun über die Drehung des Zylinderkerns 11 gleichzeitig das Steuerglied 13 rotatorisch um die Achse 16 sich bewegt, nimmt das Steuerglied 13 das Koppelelement 31 mit, wobei gleichzeitig das Koppelelement 31 mit dem Sperrelement 50 in Richtung des Erkennungselementes 14 verschoben werden. Die Verschiebung des Sperrelementes 50 sowie des Koppelelementes 31 erfolgt translatorisch. Hierbei bewegt sich das Sperrelement 50 aus seiner Verriegelungsstellung 1 in Richtung Entriegelungsstellung 2, die in Figur 6 erreicht ist. In Figur 2 befindet sich die Sicherheitssperre 30 im deaktivierten Zustand 6, in dem das Hebelelement 32 sich in seiner Freigabeposition 7 befindet.

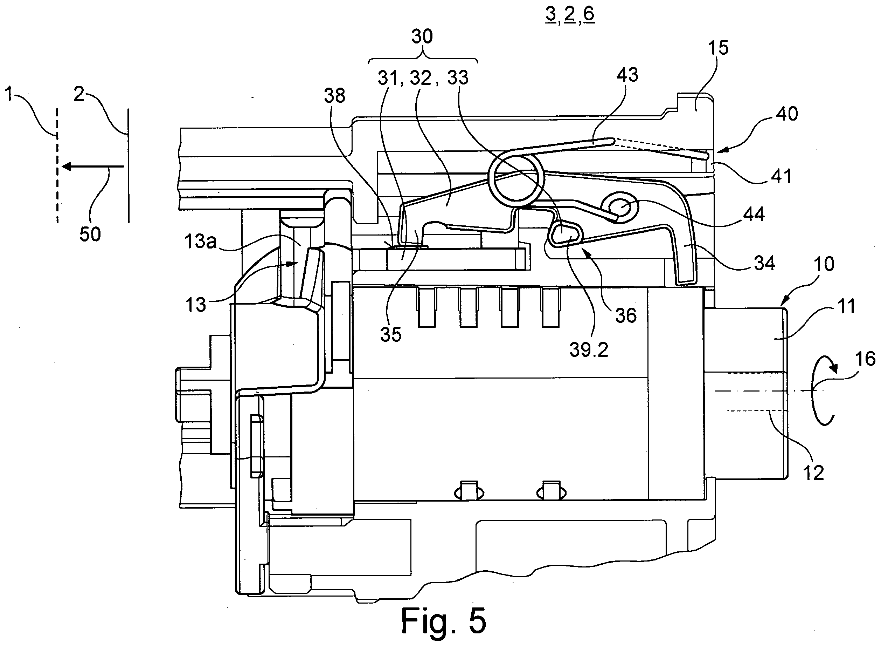

Während sich nun ausgehend von Figur 2 der Zylinderkern 11 um die Achse 16 rotiert, führt das Hebelelement 32 seine oben beschriebene Bewegung aus, wobei gleichzeitig das zweite Ende 35 das Koppelelement 31 auf seine Auflagefläche 38 kontaktiert. Während nun der Zylinderkern 11 weiter um die Achse 16 rotiert, erfolgt eine weitere Linearbewegung des Koppelelementes 31 in Richtung des Erkennungselementes 14, wobei das Hebelelement 32 ausgehend von Figur 3 bis Figur 5 seine Zwischenposition unbeweglich beibehält. Das Koppelelement 31 hat eine Ausnehmung 37, in die das zweite Ende 35 des Hebelelementes 32 gemäß Figur 6 hineinfahren kann. In Figur 6 befindet sich das Hebelelement 32 in der Arretierposition 8, bei der eine Bewegung des Koppelelementes 31 sowie des Sperrelementes 50 in Richtung Lenksäule verhindert ist. In dieser Figur 6 nimmt das Sperrelement 50 seine Entriegelungsstellung 2 ein, wobei gleichzeitig die Sicherheitssperre 30 sich im aktivierten Zustand 5 befindet. Wie ausgehend von Figur 5 gezeigt ist, führt das Hebelelement 32 mit seiner Drehachse 33 eine Hubbewegung nach unten aus. Damit diese Bewegung des Hebelelementes 32 in die Arretierposition 8 stattfindet, ist ein Federelement 43 vorgesehen, welches eine Federkraft auf das Hebelelement 32 in Richtung Zylinderkern 11 ausübt. Hierdurch wird bezweckt, dass in der eingefahrenen Lage 4 des Erkennungselementes 14 das Hebelelement 32 losgelöst vom Koppelelement 31 ist und gleichzeitig eine Kontaktierung des ersten Endes 34 des Hebelelementes 32 mit dem Erkennungselement 14 vorliegt.

Einer der Besonderheiten des gezeigten Ausführungsbeispieles ist, dass das Hebelelement 32 derart gelagert ist, dass bei der Überführung des Sperrelementes 50 von der Verriegelungsstellung 1 in die Entriegelungsstellung 2 das Hebelelement 32 bei der Bewegung zwischen der Freigabeposition 7 und der Arretierposition 8 mehrere Bewegungen ausführt, wobei eine erste Bewegung eine Drehbewegung um eine Drehachse ist und eine zweite Bewegung durch eine Verschiebung des Hebelelementes 32 entlang einer definierten Kurvenbahn bestimmt ist. Somit kann das Hebelelement 32 sich um eine Drehachse verschwenken als auch eine Bewegung, insbesondere Hubbewegung mit der Drehachse 33 ausführen.

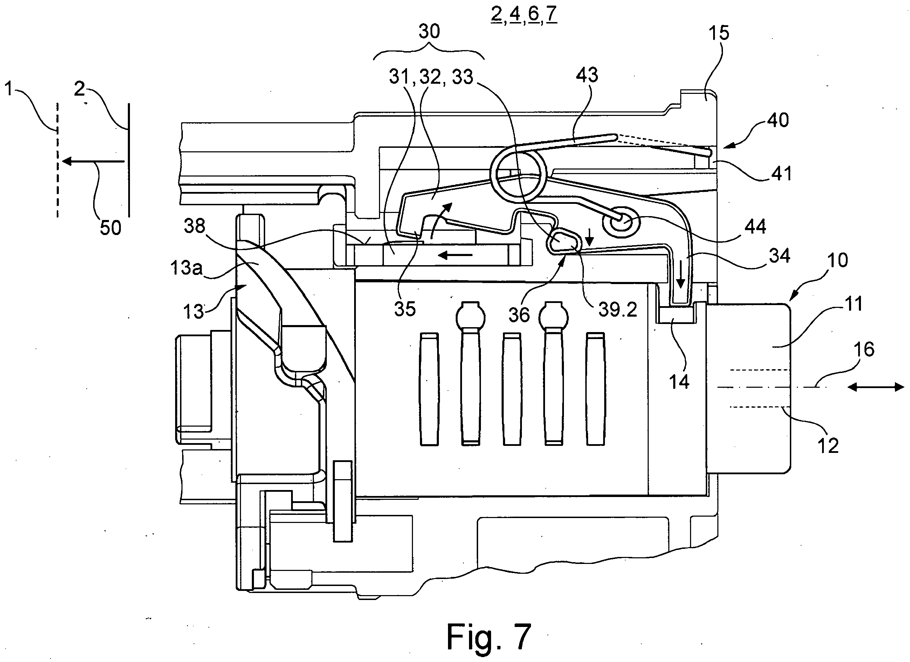

Das Hebelelement 32 ist ferner derart innerhalb des Gehäuses 15 gelagert, dass bei der Überführung des Sperrelementes 50 von der Entriegelungsstellung 2, die in Figur 6 gezeigt ist, in die Verriegelungsstellung 1, die in Figur 7 gezeigt ist, das Hebelelement 32 lediglich eine Bewegung um die Drehachse 33 ausführt. Damit das Hebelelement 32 eine sichere und zuverlässige Bewegung in seine jeweilige Position 7, 8 ausführen kann, ist eine entsprechende Lagerung 36 innerhalb des Gehäuses 15 vorgesehen. Gemäß Figur 6 greift das zweite Ende 35 des Hebelelementes 32 in die Ausnehmung 37 des Koppelelementes 31 formschlüssig ein. Die Auflagefläche 38, die mit der Ausnehmung 37 ausgeführt ist, bildet mit dem Koppelelement 31 ein gemeinsames Bauteil. Wenn das zweite Ende 35 in die Ausnehmung 37 einfährt (siehe Figur 6), befindet sich das zweite Ende 35 kurzzeitig kräftefrei und kontaktlos in der Ausnehmung 37 des Koppelelementes 31. Da das Steuerglied 13 ausgehend von Figur 5 anschließend sich um wenige Winkelgrade um die Achse 16 zurückdreht, erfolgt eine Zurückbewegung des Koppelelementes 31 in Richtung Lenksäule, so dass in der Arretierposition 8 schließlich das zweite Ende 35 des Hebelelementes 32 in der Ausnehmung 37 sich befindet und eine Kontaktierung zwischen dem zweiten Ende 35 des Hebelelementes 32 mit einem Bereich der Ausnehmung 37 vorliegt. Wie in Figur 6 zu erkennen ist, ist der Zylinderkern 11 mit dem Steuerglied 13 in einer derartigen Drehlage, dass ein Abstand zwischen dem Steuerglied 13 und dem Koppelelement 31 besteht. Ausgehend von Figur 2 bis Figur 4 liegt das Steuerglied 13 jedoch am Koppelelement 31 an, damit bei einer Bewegung des Zylinderkerns 11 um die Achse 16 eine entsprechende Kraft auf das Sperrelement 50 ausgeübt werden kann, damit das Sperrelement 50 aus der Verriegelungsstellung 1 in die Entriegelungsstellung 2 überführt werden kann.

Zudem ist in Figur 1 zu erkennen, dass das Hebelelement 32 eine erste Ausbuchtung 39.1 aufweist, die seitlich am Hebelelement 32 angeordnet ist und senkrecht zur Längserstreckung des Hebelelementes 32 verläuft. Ferner weist das Gehäuse 15 eine Montageöffnung 40 mit einer Montagenut 41 und eine Montageausnehmung 42 für die erste Ausbuchtung 39.1 auf. Während des Einsetzens des Hebelelementes 32 verfährt die erste Ausbuchtung 39.1 entlang der Montagenut 41 so lange, bis die erste Ausbuchtung 39.1 in die Montageausnehmung 42 überführt wird und dort ihre endgültige Endmontagestellung erreicht. Ferner ist eine zweite Ausbuchtung 39.2 am Hebelelement 32 ausgeführt, die ebenfalls seitlich am Hebelelement 32 angeordnet ist und senkrecht zur Längserstreckung des Hebelelementes 32 sich erstreckt. Durch die zweite Ausbuchtung 39.2 verläuft die Drehachse 33. Die zweite Ausbuchtung 39.2 ist in der Lagerung 36 des Gehäuses 15 beweglich gehalten. Beide Ausbuchtungen 39.1, 39.2 sind vorsprungartig, aus dem Hebelelement 32 sich erstreckend ausgeführt. Im vorliegenden Ausführungsbeispiel ist die erste Ausbuchtung 39.1 versetzt zur zweiten Ausbuchtung 39.2 am Hebelelement 32 angeordnet. Damit bei der Montage das Hebelelement 32 zuverlässig in seine Endmontagestellung gebracht wird, wird das Hebelelement 32 gemeinsam mit dem Federelement 43 in die Montageöffnung 40 eingeschoben. Hierbei drückt das Federelement 43 während der Bewegung des Hebelelementes 32 entlang der Montagenut 41 auf das Hebelelement 32. Hat die erste Ausbuchtung 39.1 eine definierte Montagetiefe innerhalb des Gehäuses 15 erreicht, das bedeutet, im vorliegenden Ausführungsbeispiel, dass die erste Ausbuchtung 39.1 oberhalb der Montageausnehmung 42 sich befindet, drückt das Federelement 43 das Hebelelement 32 in die Monfageausnehmung 42. Somit erreicht das Hebelelement 32 seine Endmontagestellung, die beispielsweise in Figur 2 gezeigt ist. Hierbei wird in der Endmontagestellung des Hebelelementes 32 das Federelement 43 zum Einen in der Montageöffnung 40 an ihrem vorderen Bereich gehalten und zum Anderen in einer Öffnung 43 des Hebelelementes 32.

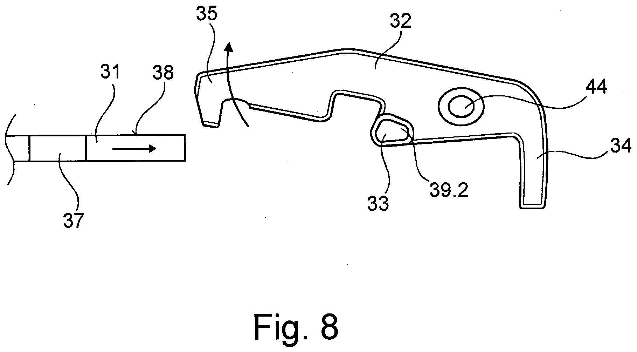

Figur 8 zeigt eine weitere Ausführungsform der Sicherheitssperre 30, wobei im Gegensatz zur Figur 2 das zweite Ende 35 des Hebelelementes 32 beabstandet und vor dem Koppelelement 31 liegt, wenn die Sicherheitssperre 30 sich in ihrem deaktivierten Zustand 6 befindet. Erfolgt nun gemäß Figur 3 und den weiteren Figuren eine entsprechende Drehbewegung des Schließzylinders 10, um das Sperrelement 50 aus der Verriegelungsstellung 1 in die Entriegelungsstellung 2 zu überführen, bewegt sich gemäß Figur 8 das Koppelelement 31 in Richtung des zweiten Endes 35 des Hebelelementes 32. Es kommt zu einer Kontaktierung des Koppelelementes 31 mit dem Hebelelement 32, der aufgrund seiner geometrischen schrägen Kontur am zweiten Ende 35 nach oben schwenkt. Anschließend verfährt das zweite Ende 35 des Hebelelementes 32 auf der Auflagefläche 38, bis das zweite Ende 35 in die Ausnehmung 37 des Koppelelementes 31 hinein verfährt, wodurch das Hebelelement 32 seine Arretierposition 8 einnehmen kann. Somit ist das Ausführungsbeispiel gemäß Figur 8 vollständig auf das Ausführungsbeispiel gemäß Figur 1 bis Figur 7 anwendbar. Damit das Hebelelement 32 zuverlässig zwischen der Freigabeposition 7 und der Arretierposition 8 sich bewegen kann, befindet sich der Kraftangriffspunkt des Federelementes 43 gemäß der Figuren 1 bis 8 zwischen der Drehachse 33 und dem ersten Ende 34 des Hebelelementes 32.

### Bezugszeichenliste

- 1: Verriegelungsstellung
- 2: Entriegelungsstellung
- 3: ausgefahrene Lage
- 4: eingefahrene Lage
- 5: aktivierter Zustand
- 6: deaktivierter Zustand
- 7: Freigabeposition
- 8: Arretierposition

- 10: Schließzylinder
- 11: Zylinderkern
- 12: Schlüsselkanal
- 13: Steuerglied
- 13a: Hubkurve
- 14: Erkennungselement
- 15: Gehäuse
- 16: Achse

- 30: Sicherheitssperre
- 31: Koppelelement
- 32: Hebelelement
- 33: Drehachse
- 34: erstes Ende des Hebelelementes
- 35: zweites Ende des Hebelelementes
- 36: Lagerung
- 37: Ausnehmung
- 38: Auflagefläche
- 39: Ausbuchtung
- 39.1: erste Ausbuchtung
- 39.2: zweite Ausbuchtung
- 40: Montageöffnung
- 41: Montagenut
- 42: Montageausnehmung
- 43: Federelement
- 44: Öffnung

- 50: Sperrelement

## Patentansprüche

1. Vorrichtung zur Verlagerung eines Sperrelementes (50) eines funktionswesentlichen Bauteils, insbesondere einer Lenksäule eines Kraftfahrzeuges, mit einem Schließzylinder (10), der einen drehbaren Zylinderkern (11) mit einem Schlüsselkanal (12) aufweist,
einem am Schließzylinder (10) angeordneten Steuerglied (13), das mit dem Sperrelement (50) derart in Wirkverbindung steht, dass bei einer Drehung des Zylinderkerns (11) das Sperrelement (50) zwischen einer Verriegelungsstellung (1) und einer Entriegelungsstellung (2) bringbar ist, wobei
der Schließzylinder (10) ein Erkennungselement (14) aufweist, das zwischen einer ausgefahrenen (3) und einer eingefahrenen Lage (4) bewegbar ist, wobei
bei einem schlüsselfreien Schlüsselkanal (12) das Erkennungselement (14) in der eingefahrenen Lage (4) sich befindet und
bei einem eingeführten Schlüssel im Schlüsselkanal (12) das Erkennungselement (14) in der ausgefahrenen Lage (3) sich befindet,
eine Sicherheitssperre (30) vorgesehen ist, die in einen aktivierten Zustand (5) und einen deaktivierten Zustand (6) bringbar ist und ein Koppelelement (31) aufweist, das mit dem Sperrelement (50) sowie mit dem Steuerglied (13) in Wirkverbindung steht, wobei in dem deaktivierten Zustand (6) die Sicherheitssperre (30) eine Bewegung des Sperrelementes (50) zulässt und das Erkennungselement (14) in der eingefahrenen Lage (4) sich befindet, bei der das Erkennungselement (14) entkoppelt vom Koppelelement (31) ist, und
in dem aktivierten Zustand (5) die Sicherheitssperre (30) eine Bewegung des Sperrelementes (50) aus der Entriegelungsstellung (2) in die Verriegelungsstellung (1) blockiert und das Erkennungselement (14) in der ausgefahrenen Lage (3) sich befindet, dass die Sicherheitssperre (30) ein Hebelelement (32) aufweist, das zwischen dem Erkennungselement (14) und dem Koppelelement (31) um eine Drehachse (33) bewegbar angeordnet ist, wobei
durch eine Bewegung des Erkennungselements (14) das Hebelelement (32) zwischen einer Freigabeposition (7) und einer Arretierposition (8) bewegbar ist,
in der Arretierposition (8) das Hebelelement (32) am Koppelement (31) angreift,
in der Freigabeposition (7) das Hebelelement (32) eine Bewegung des Koppelelement (31) zulässt,
und das Hebelelement (32) derart gelagert ist, dass bei der Bewegung zwischen der Freigabeposition (7) und der Arretierposition (8) die Drehachse (33) verschiebbar ist,
**dadurch gekennzeichnet,**
**dass** das Steuerglied (13) eine Hubkurve (13a) aufweist, die bei einer Drehung des Zylinderkerns (11) auf das Koppelelement (31) wirkt, wodurch das Koppelelement (31) eine translatorische Bewegung in Richtung Erkennungselement (14) erfährt.

2. Vorrichtung nach Anspruch 1,
**dadurch gekennzeichnet,**
**dass** das Hebelelement (32) derart gelagert ist, dass bei der Überführung des Sperrelementes (50) von der Verriegelungsstellung (1) in die Entriegelungsstellung (2) das Hebelelement (32) bei der Bewegung zwischen der Freigabeposition (7) und der Arretierposition (8) mindestens zwei Bewegungen ausführt, wobei eine erste Bewegung eine Drehbewegung um die Drehachse (33) ist und eine zweite Bewegung durch eine Verschiebung des Hebelelementes (32) entlang einer definierten Kurvenbahn bestimmt ist, wobei insbesondere die zweite Bewegung eine translatorische Bewegung ist.

3. Vorrichtung nach Anspruch 2,
**dadurch gekennzeichnet,**
**dass** die erste und die zweite Bewegung zumindest teilweise überlagert sind.

4. Vorrichtung nach einem der vorhergehenden Ansprüche,
**dadurch gekennzeichnet,**
**dass** das Hebelelement (32) derart gelagert ist, dass bei der Überführung des Sperrelementes (50) von der Entriegelungsstellung (2) in die Verriegelungsstellung (1) das Hebelelement (32) lediglich eine Bewegung, insbesondere eine Drehbewegung um die Drehachse (33) ausführt.

5. Vorrichtung nach einem der vorhergehenden Ansprüche,
**dadurch gekennzeichnet,**
**dass** auf das Hebelelement (32) ein Federelement (43) wirkt, wodurch in der eingefahrenen Lage (4) des Erkennungselementes (14) das Hebelelement (32) losgelöst vom Koppelelement (31) ist und gleichzeitig eine Kontaktierung eines ersten Endes (34) des Hebelelement (32) mit dem Erkennungselement (14) vorliegt.

6. Vorrichtung nach einem der vorhergehenden Ansprüche,
**dadurch gekennzeichnet,**
**dass** eine Lagerung (36) des Hebelelementes (32) vorgesehen ist, die eine Bewegung des Hebelelementes (32) in mindestens zwei Richtungen ermöglicht und/oder dass die Bewegung des Hebelelementes (32) eine Drehbewegung und eine Hubbewegung ist.

7. Vorrichtung nach einem der vorhergehenden Ansprüche,
**dadurch gekennzeichnet,**
**dass** das Hebelelement (32) ein zweites Ende (35) aufweist, das im aktivierten Zustand (5) der Sicherheitssperre (30) in das Koppelelement (31) formschlüssig eingreift und/oder dass das Koppelelement (31) eine Ausnehmung (37) aufweist, wobei in der Arretierposition (8) des Hebelelementes (32) das zweite Ende (35) des Hebelelementes (32) in der Ausnehmung (37) sich befindet.

8. Vorrichtung nach einem der vorhergehenden Ansprüche,
**dadurch gekennzeichnet,**
**dass** das Koppelelement (31) eine Auflagefläche (38) aufweist, wobei während der Bewegung des Sperrelementes (50) zwischen der Verriegelungsstellung (1) und Entriegelungsstellung (2) die Auflagefläche (38) sich relativ zum Hebelelement (32) bewegt und gleichzeitig eine Kontaktierung des zweiten Endes (35) des Hebelelementes (32) an der Auflagefläche (38) vorliegt, wobei insbesondere die Ausnehmung (37) in der Auflagefläche (38) integriert ist.

9. Vorrichtung nach einem der vorhergehenden Ansprüche,
**dadurch gekennzeichnet,**
**dass** das Hebelelement (32) zumindest eine Ausbuchtung (39) aufweist, die seitlich am Hebelelement (32) angeordnet ist und senkrecht zur Längserstreckung des Hebelelementes (32) sich erstreckt, wobei insbesondere zwei Ausbuchtungen (39) vorgesehen sind, die jeweils an einer Seite des Hebelelementes (32) angeordnet sind.

10. Vorrichtung nach einem der vorhergehenden Ansprüche,
**dadurch gekennzeichnet,**
**dass** ein Gehäuse (15) vorgesehen ist, in dem die Sicherheitssperre (30) mit dem Schließzylinder (10) angeordnet sind, wobei das Gehäuse (15) eine Montageöffnung (40) zum Einsetzen des Hebelelementes (32) aufweist, wobei die Montageöffnung (40) mit einer Geometrie ausgeführt ist, die als Montagehilfe dient, wobei insbesondere die Montageöffnung (40) eine Montagenut (41) und eine Montageausnehmung (42) für eine erste Ausbuchtung (39) des Hebelelementes (32) aufweist, wobei während des Einsetzen des Hebelelementes (32) die erste Ausbuchtung (39) entlang der Montagenut (41) so lange verfahren wird, bis die erste Ausbuchtung (39) in die Montageausnehmung (42) überführt wird und dort die endgültige Endmontagestellung erreicht.

11. Vorrichtung nach einem der vorhergehenden Ansprüche,
**dadurch gekennzeichnet,**
**dass** eine zweite Ausbuchtung (39) in der Lagerung (36) des Gehäuses (15) beweglich gehalten ist und/oder dass die Ausbuchtungen (39) vorsprungartig aus dem Hebelelement (32) sich erstrecken.

12. Vorrichtung nach einem der vorhergehenden Ansprüche,
**dadurch gekennzeichnet,**
**dass** die erste Ausbuchtung (39) versetzt zur zweiten Ausbuchtung (39) am Hebelelement (32) angeordnet ist und/oder dass das Federelement (43) an der Montageöffnung (40) befestigt ist und gleichzeitig am Hebelelement (32) angreift, wobei insbesondere das Federelement (43) in der Montagenut (41) befestigt ist und gleichzeitig in einer Öffnung (44) des Hebelelementes (32) wirkt.

13. Vorrichtung nach einem der vorhergehenden Ansprüche,
**dadurch gekennzeichnet,**
**dass** eine Schlüsselabzugssicherung vorgesehen ist, die lediglich in einer Stellung (1, 2) des Zylinderkerns (11) ein Herausziehen des Schlüssels aus dem Schlüsselkanal (12) erlaubt und/oder dass der Kraftangriffspunkt des Federelements (43) auf das Hebelelement (32) zwischen der Drehachse (33) und dem ersten Ende (34) des Hebelelements (32) wirkt.

## Claims

1. Device for relocation of a blocking element (50) of a functional essential component, particularly a steering column of a motor vehicle, with a closing cylinder (10) which comprises a pivotable cylinder core (11) with a key channel (12), a control element (13) assembled in the closing cylinder (10) which is in an operative connection with the blocking element (50) such that during a pivoting of the cylinder core (11) the blocking element (50) is shiftable between a locking position (1) and an unlocking position (2), wherein the closing cylinder (10) comprises a recognition element (14) which is movable between an extended and retracted position (4), wherein with a keyless key channel (12) the recognition element (14) is in the retracted position (4) and with an introduced key in the key channel (12) the recognition element (14) is in the extracted position (3), a safety lock (30) is intended which is shiftable into an activated state (5) and a deactivated state (6) and comprises a coupling element (31) which is in operative connection with the blocking element (50) and the control element (13), wherein in the deactivated state (6) the safety lock (30) allowas a movement of the blocking element (50) and the recognition element (14) is in the retracted position (4) with which the recognition element (14) is decoupled from the coupling element (31) and in the activated state (5) the safety lock (30) blocks a movement of the blocking element (50) from the unlocking position (2) into the locking position (1) and the recognition element (14) is in the extended position (3) that the safety block (30) comprises a lever element (32) which is movably assembled between the recognition element (14) and the coupling element (31) about a pivoting axis (33), wherein by a movement of the recognition element (14) the lever element (32) is movable between a release position (7) and a resting position (8); in the resting position (8) the lever element (32) engages at the coupling element (31); in the release position (7) the lever element (32) allows a movement of the coupling element (31) and the lever element (32) is supported such that during a movement between the release position (7) and the resting position (8) the pivoting axis (33) is displacable,
**characterized in that**
the control element (13) comprises a lifting arch (13a) which acts during a pivoting of
the cylinder core (11) to the coupling element (31), wherein the coupling element (31) performs a translational movement in the direction of the recognition element (14).

2. Device according to claim 1
**characterized in that**
the lever element (32) is supported such that during a transfer of the blocking element (50) from the locking position (1) into the unlocking position (2) the lever element (32) performs at least two movements during a movement between the release position (7) and the resting position (8), wherein the first movement is a pivoting movement about the pivoting axis (33) and a second movement is determined by a displacement of the lever element (32) along a defined curved path, wherein particularly the second movement is a translational movement (3).

3. Device according to claim 2
**characterized in that**
the first and second movement are at least partially overlapping.

4. Device according to one of the preceding claims
**characterized in that**
the lever element (32) is supported such that during a transfer of the blocking element (40) from the unlocking position (2) to the locking position (1) the lever element (32) only performs a movement, particularly a pivoting movement about the pivoting axis (33).

5. Device according to one of the preceding claims
**characterized in that**
a spring element (43) acts on the lever element (32), wherein in the retracted position (4) of the recognition element (14) the lever element (32) is detached from the coupling element (31) and simultaneously, a contacting of the first edge (34) of the lever element (32) arises with the recognition element (14).

6. Device according to one of the preceding claims
**characterized in that**
a bearing (36) of the lever element (32) is intended which enables a movement of the lever element (32) in at least two directions and/or that the movement of the lever element (32) is a pivoting movement and a lifting movement.

7. Device according to one of the preceding claims
**characterized in that**
the lever element (32) comprises a second edge (35) which formfittingly engages into the coupling element (31) in the activated state (5) of the safety lock (30) and/or that the coupling element (31) comprises a recess (37), wherein in the resting position (8) the lever element (32) the second edge (35) of the lever element (32) is within the recess (37).

8. Device according to one of the preceding claims
**characterized in that**
the coupling element (31) comprises a contact area (38), wherein during the movement of the blocking element (50) between the locking position (1) and the unlocking position (2) the contacting area (38) moves relatively to the lever element (32) and simultaneously, a contact of the second edge (35) of the lever element (32) arises at the contact area (38), wherein particularly the recess (37) is integrated into the contact area (38).

9. Device according to one of the preceding claims
**characterized in that**
the lever element (32) comprises at least one projection (39) which is assembled lateral at the lever element (32) and extends perpendicular to the longitudinal extension of the lever element (32), wherein particularly two projections (39) are intended which are assembled each at one side of the lever element (32).

10. Device according to one of the preceding claims
**characterized in that**
a housing (15) is intended in which a safety block (30) is assembled with the closing cylinder (10), wherein the housing (15) comprises a mounting opening (40) for insertion of the lever element (32), wherein the mounting opening (40) is configured with a geometry which serves as a mounting aid, wherein particularly the mounting opening (40) comprises a mounting grove (41) and a mounting recess (42) for a first projection (39) of the lever element (32), wherein during the insertion of the lever element (32) the first projection (39) is displaced along the mounting notch (41) until the first projection (39) is transferred into the mounting recess (42) and reaches the final mounting position.

11. Device according to one of the preceding claims
**characterized in that**
a second projection (39) is movably retained in the bearing (36) of the housing (15) and/or that the projections (39) protrudingly extend from the lever element (32).

12. Device according to one of the preceding claims
**characterized in that**
the first projection (39) is displaced to the second projection (39) at the lever element (32) and/or that the spring element (43) is assembled at the mounting opening (40) and simultaneously, engages at the lever element (32), wherein particularly the spring element (43) is assembled at the mounting notch (41) and simultaneously acts in an opening (44) of the lever element (32).

13. Device according to one of the preceding claims
**characterized in that**
a key deduction security device is intended which only permits an extraction of the key from the key channel (12) in a position (1, 2) of the cylinder core (11) and/or that a force application point of the spring element (43) acts on the lever element (32) between the pivot axis (33) and the first edge (34) of the lever element (32).

## Revendications

1. Dispositif affecté au déplacement d'un élément de blocage (50) d'une partie structurelle fonctionnellement essentielle, en particulier d'une colonne de direction d'un véhicule automobile, comprenant
un cylindre de fermeture (10), muni d'un noyau rotatif (11) présentant un canal (12) de passage d'une clé,
un organe de commande (13) qui est situé sur ledit cylindre de fermeture (10) et est en liaison opérante avec ledit élément de blocage (50) de façon telle que, lors d'une rotation du noyau (11) dudit cylindre, ledit élément de blocage (50) puisse être mû entre une position de verrouillage (1) et une position de déverrouillage (2),
ledit cylindre de fermeture (10) comportant un élément de repérage (14) pouvant être mû entre des positions déployée (3) et rétractée (4), sachant que
l'élément de repérage (14) occupe la position rétractée (4) en présence d'un canal de passage (12) dépourvu de clé, et que
ledit élément de repérage (14) occupe la position déployée (3) en présence d'une clé introduite dans ledit canal de passage (12),
un verrou de sécurité (30) étant prévu, lequel peut être amené à un état activé (5) et à un état désactivé (6), et est muni d'un élément d'accouplement (31) en liaison opérante avec l'élément de blocage (50), ainsi qu'avec l'organe de commande (13), sachant qu'à l'état désactivé (6), le verrou de sécurité (30) autorise un mouvement de l'élément de blocage (50), et l'élément de repérage (14) occupe la position rétractée (4) dans laquelle
ledit élément de repérage (14) est désaccouplé d'avec ledit élément d'accouplement (31),
et
qu'à l'état activé (5), ledit verrou de sécurité (30) interdit un mouvement dudit élément de blocage (50), de la position de déverrouillage (2) à la position de verrouillage (1), et ledit élément de repérage (14) occupe la position déployée (3),
ledit verrou de sécurité (30) étant pourvu d'un élément (32) formant levier et agencé avec mobilité, autour d'un axe de rotation (33), entre ledit élément de repérage (14) et ledit élément d'accouplement (31),
l'élément (32), formant levier, pouvant être mû entre un emplacement de libération (7) et un emplacement d'arrêt (8), suite à un mouvement dudit élément de repérage (14),
ledit élément (32), formant levier, venant en prise avec l'élément d'accouplement (31) audit emplacement d'arrêt (8),
ledit élément (32), formant levier, autorisant un mouvement dudit élément d'accouplement (31) audit emplacement de libération (7),
et ledit élément (32), formant levier, étant monté de telle sorte que l'axe de rotation (33) puisse se déplacer au cours du mouvement entre ledit emplacement de libération (7) et
ledit emplacement d'arrêt (8),
**caractérisé par le fait**
**que** l'organe de commande (13) présente une came de levage (13a) agissant sur l'élément d'accouplement (31) lors d'une rotation du noyau (11) du cylindre, un mouvement translatoire étant ainsi imprimé, audit élément d'accouplement (31), en direction de l'élément de repérage (14).

2. Dispositif selon la revendication 1,
**caractérisé par le fait**
**que** l'élément (32), formant levier, est monté de façon telle que, lorsque l'élément de blocage (50) passe de la position de verrouillage (1) à la position de déverrouillage (2), ledit élément (32), formant levier, accomplisse au moins deux mouvements au cours du mouvement entre l'emplacement de libération (7) et l'emplacement d'arrêt (8), un premier mouvement étant un mouvement rotatoire autour de l'axe de rotation (33), et un second mouvement étant déterminé par un déplacement dudit élément (32), formant levier, le long d'une trajectoire courbe bien définie, sachant notamment que ledit second mouvement est un mouvement translatoire.

3. Dispositif selon la revendication 2,
**caractérisé par le fait**
**que** les premier et second mouvements sont superposés, au moins en partie.

4. Dispositif selon l'une des revendications précédentes,
**caractérisé par le fait**
**que** l'élément (32), formant levier, est monté de façon telle que, lorsque l'élément de blocage (50) passe de la position de déverrouillage (2) à la position de verrouillage (1), ledit élément (32) formant levier accomplisse uniquement un mouvement, en particulier un mouvement rotatoire autour de l'axe de rotation (33).

5. Dispositif selon l'une des revendications précédentes,
**caractérisé par le fait**
**qu'**un élément élastique (43) agit sur l'élément (32) formant levier, de sorte que, dans la position rétractée (4) de l'élément de repérage (14), ledit élément (32) formant levier est dissocié d'avec l'élément d'accouplement (31) et il s'instaure, simultanément, une mise en contact d'une première extrémité (34) dudit élément (32), formant levier, avec ledit élément de repérage (14).

6. Dispositif selon l'une des revendications précédentes,
**caractérisé par**
la présence d'un système (36) de montage de l'élément (32) formant levier, qui autorise un mouvement dudit élément (32) formant levier, dans au moins deux directions ; et/ou par le fait que le mouvement dudit élément (32), formant levier, est un mouvement de rotation et un mouvement de soulèvement.

7. Dispositif selon l'une des revendications précédentes,
**caractérisé par le fait**
**que** l'élément (32), formant levier, présente une seconde extrémité (35) qui pénètre par complémentarité de formes dans l'élément d'accouplement (31), à l'état activé (5) du verrou de sécurité (30) ; et/ou par le fait que ledit élément d'accouplement (31) est pourvu d'un évidement (37), ladite seconde extrémité (35) de l'élément (32) formant levier étant située dans ledit évidement (37) à l'emplacement d'arrêt (8) dudit élément (32) formant levier.

8. Dispositif selon l'une des revendications précédentes,
**caractérisé par le fait**
**que** l'élément d'accouplement (31) comporte une surface d'appui (38), sachant que, au cours du mouvement de l'élément de blocage (50) entre la position de verrouillage (1) et la position de déverrouillage (2), ladite surface d'appui (38) se meut par rapport à l'élément (32) formant levier et il s'instaure, simultanément, en venue en contact de la seconde extrémité (35) dudit élément (32), formant levier, contre ladite surface d'appui (38), l'évidement (37) étant notamment pratiqué dans ladite surface d'appui (38).

9. Dispositif selon l'une des revendications précédentes,
**caractérisé par le fait**
**que** l'élément (32), formant levier, présente au moins une protubérance (39) qui est disposée latéralement sur ledit élément (32) formant levier, et s'étend perpendiculairement à l'étendue longitudinale dudit élément (32) formant levier, sachant qu'il est notamment prévu deux protubérances (39) respectivement disposées d'un côté dudit élément (32) formant levier.

10. Dispositif selon l'une des revendications précédentes,
**caractérisé par**
la présence d'un boîtier (15) dans lequel le verrou de sécurité (30) et le cylindre de fermeture (10) sont conjointement logés, ledit boîtier (15) étant muni d'un orifice de montage (40) dévolu à l'insertion de l'élément (32) formant levier, ledit orifice de montage (40) présentant une géométrie qui procure une aide au montage, lequel orifice de montage (40) est notamment doté d'une rainure de montage (41) et d'un évidement de montage (42) affectés à une première protubérance (39) dudit élément (32) formant levier, sachant que, lors de l'insertion dudit élément (32) formant levier, ladite première protubérance (39) est déplacée, le long de ladite rainure de montage (41), jusqu'à ce que ladite première protubérance (39) soit transférée audit évidement de montage (42) et atteigne, dans ce dernier, la position de montage définitive.

11. Dispositif selon l'une des revendications précédentes,
**caractérisé par le fait**
**qu'**une seconde protubérance (39) est retenue avec mobilité dans le système de montage (36) du boîtier (15) ; et/ou par le fait que les protubérances (39) dépassent au-delà de l'élément (32) formant levier, à la manière de saillies.

12. Dispositif selon l'une des revendications précédentes,
**caractérisé par le fait**
**que** la première protubérance (39) occupe, sur l'élément (32) formant levier, une position décalée par rapport à la seconde protubérance (39) ; et/ou par le fait que l'élément élastique (43) est fixé au niveau de l'orifice de montage (40) et vient simultanément en prise avec ledit élément (32) formant levier, sachant notamment que ledit élément élastique (43) est fixé dans la rainure de montage (41) et agit, simultanément, dans une ouverture (44) dudit élément (32) formant levier.

13. Dispositif selon l'une des revendications précédentes,
**caractérisé par**
la présence d'une sécurité antiretrait qui autorise une extraction de la clé, hors du canal (12) de passage de ladite clé, uniquement dans une position (1, 2) du noyau (11) du cylindre ; et/ou par le fait que le point d'application de force de l'élément élastique (43), sur l'élément (32) formant levier, agit entre l'axe de rotation (33) et la première extrémité (34) dudit ledit élément (32) formant levier.
